# EUROPÄISCHE PATENTSCHRIFT

(11) **EP 1 454 729 B1**
(45) Veröffentlichungstag und Bekanntmachung des Hinweises auf die Patenterteilung: **14.12.2011**
(21) Anmeldenummer: 04001493.8
(22) Anmeldetag: 23.01.2004
(51) Int. Cl.: B29C 35/02, B29C 35/08, A61C 19/00, G01K 11/12

(54) **Prüfkörper für Polymerisationsgeräte und dessen Verwendung**
Test body for polymerization appliances and use thereof
Eprouvette pour appareils de polymérisation et son utilisation

(30) Priorität: 06.03.2003 DE 10309855
(43) Veröffentlichungstag der Anmeldung: 08.09.2004
(73) Patentinhaber: Ivoclar Vivadent AG, 9494 Schaan (LI)
(72) Erfinder: Pokorny, Walter, 6712 Thüringen (AT); Brotzge, Michael, 6842 Koblach (AT); Längle, Werner, 6820 Frastanz (AT); Kindle, Werner, 9490 Vaduz (LI)
(74) Vertreter: Baronetzky, Klaus

(56) Entgegenhaltungen:
- EP-A- 0 329 579
- DE-A1- 1 598 308
- DE-A1- 2 414 781
- DE-A1- 19 618 542
- DE-U1- 29 716 700
- US-A- 3 816 264
- US-A- 4 871 674
- US-A- 5 786 578
- US-B1- 6 386 756

## Beschreibung

Die Erfindung betrifft einen Prüfkörper, gemäß dem Oberbegriff von Anspruch 1, sowie die Verwendung eines derartigen Prüfkörpers in einem Polymerisationsgerät.

Es ist bekannt, dass Polymerisationsgeräte, beispielsweise Lichtpolymerisationsgeräte, für die Polymerisation von Restaurationsmaterialien wie beispielsweise im Dentalbereich einer exakten Abgabe der Polymerisationsstrahlung bedürfen, um verlässliche und reproduzierbare Restaurationsergebnisse zu gewährleisten. Es ist bekannt, dass eine Abweichung von dem vorgegebenen Strahlungswert zur signifikanten Verschlechterung von Restaurationsergebnissen führen kann. So führt eine zu intensive Energiebeaufschlagung leicht zu einer zu starken Durchhärtung und damit Randspaltenbildung, während eine zu geringe Energiebeaufschlagung dazu führt, dass die Durchhärtung noch nicht vollständig ist, so dass ein nicht polymerisierter Monomeranteil in der Dentalrestauration verbleibt.

Polymerisationsgeräte für den Dentalbereich werden häufig mit unterschiedlichen Frequenzspektren der Strahlung betrieben. So ist es bekannt, in eine Haube eines Polymerisationsgeräts sowohl Lichtquellen als auch Wärmequellen zu integrieren. Eine derartige Lösung ist beispielsweise aus der DE-OS 196 18 542 bekannt, die eine Vorrichtung gemäß dem Oberbegriff des Anspruchs 1 aufweist.

Zur Kalibrierung der Lichtabgabe von Halogenlichtquellen sind verschiedene Maßnahmen vorgeschlagen worden. So ist es vorgeschlagen worden, einen Lichtsensor in einem genau bestimmten Abstand und mit einer vorgegebenen spektralen Empfindlichkeit vor der Lichtquelle anzuordnen. Das Ausgangssignal des Lichtsensors soll dann die Beleuchtungsstärke durch die Lichtquelle an der fraglichen Stelle anzeigen.

Eine derartige Lösung bedarft allerdings einer entsprechenden Verschaltung für die Ausgangsanschlüsse des Lichtsensor. Andererseits ist eine derartige mobile Beschaltung eines Lichtsensors - der dann im Betrieb entfernt werden muss - in Kombination mit einer entsprechenden Schaltung recht aufwändig und auch fehlerträchtig. Es muss beispielweise dafür Sorge getragen werden, dass nicht versehentlich während des Lichtmessbetriebs die Wärmequelle eingeschaltet wird, da der Lichtsensor ansonsten Schaden nehmen könnte.

Heutige kombinierte Wärme- und Lichthärtgeräte geben zu einem großen Teil Infrarotstrahlung, also Wärmestrahlung ab, um die Polymerisation zu gewährleisten. Dies bedeutet andererseits, dass die Infrarotstrahlung mindestens genauso wichtig wie die Lichtstrahlung ist, wenn nicht sogar relevanter. Andererseits wurde bei der Konstruktion derartiger kombinierter Polymerisationsgeräte stets davon ausgegangen, dass ein handelsüblicher Thermostat für die hinreichend genaue Feststellung der Temperatur ausreichend ist. Ein derartiger Thermostat kann in klassischer Form unter Verwendung eines Bimetallstreifens realisiert sein, oder in elektronischer Form, also unter Verwendung eines PTC- oder gegebenenfalls eines NTC-Widerstandselements. Derartige Thermostate werden meist ab Werk kalibriert, und es wird davon ausgegangen, dass die Genauigkeit während der Lebensdauer des Geräts ausreichend ist.

Andererseits zeigen die für die Herstellung von Temperatursensoren verwendeten Materialien meist eine gewisse Alterung. Um dies zu kompensieren, ist bereits eine Nachkalibrierung vorgeschlagen worden. Beispielsweise könnte mit einem mobilen elektronischen und geeichten Temperatur-Kalibriereinheit mit einem Sensor, der an der Spitze einer Sonde eingebracht wird, die in dem Polymerisationsgerät zwischen Boden und Haube eingesteckt wird, eine Nachkalibrierung vorgenommen werden. Eine derartige Nachkalibrierung ist jedoch praktisch nur durch den Hersteller des Polymerisationsgeräts möglich, denn dem Kunden ist die Anschaffung derartiger recht teurer elektronischer Temperatur-Kalibriereinheiten nicht zuzumuten.

Daher liegt der Erfindung die Aufgabe zu Grunde, ein Polymerisationsgerät und/oder einen Prüfkörper gemäß dem Oberbegriff von Anspruch 1 zu schaffen, die eine verbesserte Verlässlichkeit der Polymerisation durch Polymerisationsgeräte erlauben, ohne dass besonderer Aufwand erforderlich wäre.

Diese Aufgabe wird erfindungsgemäß durch Anspruch 1 gelöst. Vorteilhafte Weiterbildungen ergeben sich aus den Unteransprüchen.

Erfindungsgemäß besonders günstig ist es, wenn ein Prüfkörper in dem Polymerisationsgerät eingesetzt wird, der einen Grundkörper mit einem Aufnahmebereich aufweist, in dem die zu polymerisierende Masse eingebracht wird. Durch diese überraschend einfache Maßnahme wird die Möglichkeit eröffnet, den Prüfkörper mit der Wärmequelle und/oder der Lichtquelle des Polymerisationsgeräts zu beaufschlagen und hierdurch zu überprüfen, inwiefern das Polymerisationsergebnis den Erwartungen entspricht.

In besonders vorteilhafter Ausgestaltung ist der Prüfkörper mit einer Mehrzahl von verdeckten Farb-Temperaturindikatoren verbunden, die es erlauben, einen Farbumschlag bei einer bestimmten vorgegebenen Temperatur zu erkennen. Die Temperaturindikatoren können auf einer Art Skala angeordnet sein, so dass der Farbumschlag präzise der erreichten Temperatur entspricht. Die Überprüfung ist durch das Vorsehen eines irreversiblen Farbwechsels begünstigt. Entsprechende Temperaturindikatoren sind beispielsweise aus der DE-OS 199 50 516, aber auch seit längerem aus der US-PS 4,015,591 bekannt.

Erfindungsgemäß besonders günstig ist es, dass mit dem Prüfkörper die bei einer bestimmten Einstellung bestehende Durchhärttiefe des zu polymerisierenden Materials feststellbar ist. Dies lässt sich entweder durch Messung der Erhärtungsgrenze an dem aus dem Aufnahmebereich entnommenen Material feststellen, oder durch Temperaturfeststellung, beispielsweise durch die in vorteilhafter Ausgestaltung vorgesehenen Farb-Temperaturindikatoren.

Die Verwendung eines derartigen Prüfkörpers als Prüfeinrichtung hat den Vorteil, dass die Investitionen sehr gering gehalten sein können. Der Grundkörper muss lediglich eine ausreichende Temperaturfestigkeit von beispielweise 150° C aufweisen. Die Temperatur-Indikatoren können preisgünstig in Streifenform an der inneren Umfangswandung aufgebracht sein, wobei derartige streifenförmige Temperaturindikatoren preisgünstig herstellbar und beschaffbar sind.

In besonders vorteilhafter Ausgestaltung ist der Grundkörper nicht durchlässig für die Lichtstrahlung in dem von dem Polymerisationsgerät abgegebenen Strahlungsbereich. Wenn die Aufstellung des Grundkörpers dann so gewählt ist, dass eine Lichtabdeckung der Temperaturindikatoren erfolgt, ist es dem Grunde nach ausgeschlossen, dass durch die Lichtbeaufschlagung eine Fehlmessung der Temperatur erfolgt. Beispielweise kann der Prüfkörper im Wesentlichen schalenförmig aufgebaut sein, und dann umgedreht auf der ebenen Bodenwand des Polymerisationsgeräts aufgebracht werden. Er schirmt dann den innen/unten aufgebrachten Streifen aus Temperaturindikatoren ab, zumindest, wenn eine im Wesentlichen ebene Bodenwand vorliegt.

Es versteht sich, dass beliebige andere Arten der Abdeckung möglich sind. Beispielsweise kann auch während der Bestrahlung des Grundkörpers eine Art Haube aufgesetzt werden, die dann die gewünschte Abschirmung vornimmt und nach dem Messvorgang entfernt wird.

Durch Inaugenscheinnahme des Farbwechsels der Temperaturindikatoren lässt sich leicht die Abweichung von der Solltemperatur feststellen, und eine Nachjustierung des Polymerisationsgeräts kann ohne Weiteres, beispielsweise durch ein verdeckt angebrachtes Kalibrierpotentiometer vorgenommen werden.

Erfindungsgemäß besonders günstig ist es, dass der erfindungsgemäße Prüfkörper genau an der Stelle aufgebracht werden kann, an der das zu polymerisierende Restaurationsteil im Betrieb ebenfalls angebracht wird. Hierdurch lässt sich eine praxisnahe Temperaturbestimmung vollziehen.

Es versteht sich, dass erfindungsgemäß auch mit einem Prüfkörper die Eichung des Polymerisationsgeräts an mehreren Eichpunkten möglich ist. Hierzu werden nacheinander verschiedene Temperaturen als Solltemperatur eingestellt, und es wird je nach Erreichen der betreffenden Endtemperatur der Farb-Temperaturindikator, der der entsprechenden Temperatur entspricht, in Augenschein genommen und die gegebenenfalls vorliegende Abweichung festgestellt.

Es versteht sich, dass bei dieser Lösung eine Realisierung mit aufsteigenden Eichtemperaturen sinnvoll ist, zumindest, wenn irreversible Farb-Temperaturindikatoren verwendet werden.

Durch die erfindungsgemäße Abschirmung ist zugleich sichergestellt, dass die Energiequellen des Polymerisatiorisgeräts keine Strahlungsenergie auf den Temperaturindikator abgeben, der das Temperatur-Messergebnis verfälschen würde.

In einer vorteilhaften Ausgestaltung ist es vorgesehen, dass ein Bereich des Polymerisationsgeräts, der sich zwischen der Energiequelle und dem Farb-Temperaturindikator erstreckt, für den spektralen Bereich, der von der Energiequelle emittierten Strahlung undurchlässig ist.

Besonders günstig ist es, wenn der Farb-Temperaturindikator oder die Farb-Temperaturindikatoren an einer nach unten oder innen weisenden und nach unten offenen Fläche des Grundkörpers ausgebildet sind.

In vorteilhafter Ausgestaltung der Erfindung ist es vorgesehen, eine Schutzfolie anzubringen, die das zu polymerisierende Material in dem Aufnahmebereich abdeckt. Die Schutzfolie schützt das Material vor einer Vor-Aushärtung, die das Messergebnis verfälschen würde. Zudem ist es möglich, durch die Schutzfolie eine besonders glatte Oberfläche bereitzustellen, die sich nach ihrem Abziehen einstellt.

Auch wenn hier separate Lichtquellen und Wärmequellen beschrieben sind, versteht es sich, dass die erfindungsgemäße Lösung auch bei solchen Polymerisationsgeräten möglich ist, die Licht- und Wärmequellen in einer Energiequelle vereinigen, insbesondere also auch bei älteren Polymerisationsgeräten. Gerade hier kann geprüft werden, ob die Energiequelle noch eine ausreichende Leistung bereitstellt, oder ob ein Austausch geboten ist.

In einer besonders günstigen Ausgestaltung der erfindungsgemäßen Lösung ist der Grundkörper flachzylindrisch ausgebildet. Der Grundkörper kann beispielsweise einstückig sein und bildet zusammen mit der in dem Aufnahmebereich aufgenommenen polymerisierbaren Masse und gegebenenfalls den Temperaturindikatoren den Prüfkörper, der im Auslieferzustand, also vor dem Einsatz, auch noch eine lichtundurchlässige Folie aufweist, die den Aufnahmebereich abdeckt.

Der Aufnahmebereich kann bevorzugt in einer Art Nabe des Grundkörpers ausgebildet sind. Es ist bevorzugt, dass die entfernbare Folie mindestens die für die Befüllung vorgesehenen Oberflächen des Aufnahmebereichs abedeckt. Wenn der Aufnahmebereich als Durchtrittsausnehmung sich durch den Grundkörper hindurcherstreckt, sind dementsprechend bevorzugt beide Seiten der Durchtrittsausnehmung abgedeckt. Wenn der Aufnahmebereich hingegen nach der Art eines Sacklochs ausgebildet ist, ist lediglich die offene Seite abgedeckt.

In einer modifizierten Ausgestaltung erstreckt sich eine ebenfalls lichtundurchlässige Folie über die offene Seite des Grundkörpers, also die Seite, auf der die Temperaturindikatoren freiliegen. Eine derartige Folie dient auch dem Schutz der Temperaturindikatoren während des Transports der Prüfkörpers.

Die Folien oder die Folie sind/ist bevorzugt durch eine Schweißverbindung in an sich bekannter Weise auf dem Grundkörper angebracht. Über eine ebenfalls an sich bekannte Greifhandhabe ist ein Abziehen der Folie ohne Weiteres möglich. Durch die Schweißverbindung wird der Einsatz von Klebstoffen verhindert, die die Temperaturindikatoren und/oder die polymerisierbare Masse beeinträchtigen könnten.

Weitere Vorteile, Einzelheiten und Merkmale ergeben sich aus der nachstehenden Beschreibung zweier Ausführungsbeispiele anhand der Zeichnung.

Es zeigen:
- Fig. 1: eine perspektivische Ansicht einer ersten Ausführungsform eines erfindungsgemäßen Grundkörpers;
- Fig. 2: eine Darstellung der Ausführungsform des Prüfkörpers gemäß Fig. 1, jedoch aus einer anderen Perspektive;
- Fig. 3: eine perspektivische Darstellung einer weiteren Ausführungsform eines erfindungsgemäßen Prüfkörpers;
- Fig. 4: einen Schnitt durch die Ausführungsform gemäß Fig. 3; und
- Fig. 5: eine perspektivische Ansicht eines Deckels für einen erfindungsgemäßen Prüfkörper.

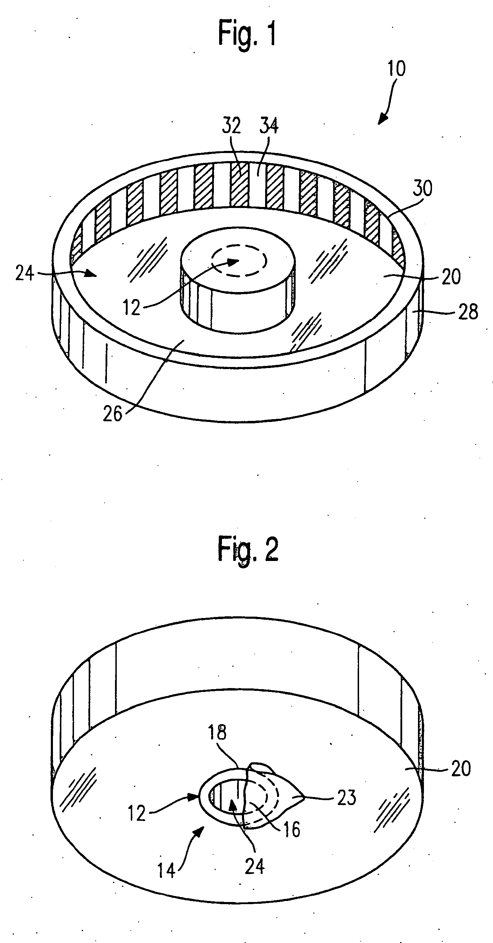

Der in Fig. 1 dargestellte Prüfkörper 10 ist für ein Polymerisationsgerät bestimmt. Das Polymerisationsgerät weist einen Aufnahmeraum für das zu polymerisierende Restaurationsteil auf und ist hier im Übrigen nicht dargestellt. Beispielsweise kann ein Polymerisationsgerät verwendet werden, dessen Energiequellen in einer Haube integriert sind, die in abgesenktem Zustand das auf einer ebenen Unterlage ruhende Restaurationsteil umgibt. Insofern wird auf die DE-OS 196 18 542 vollinhaltlich Bezug genommen. Es ist auch möglich, ein Polymerisationsgerät zu verwenden, dessen Polymerisationswirkung durch Überdruck unterstützt wird.

Der Prüfkörper weist einen bevorzugt zentralen Aufnahmebereich 12 auf, der aber auch außermittig angebracht sein kann. In den dargestellten Ausführungsbeispielen ist er flach zylindrisch, und der Aufnahmebereich 12 ist nach der Art einer Nabe mittig ausgebildet. Es versteht sich, dass der Aufnahmebereich an einer beliebigen geeigneten Stelle ausgebildet sein kann. Beispielsweise kann er ringförmig sein, oder es können sich eine Mehrzahl von Klein-Aufnahmebereichen an bestimmten geeigneten Stellen erstrecken, die auch je unterschiedliche Materialien aufnehmen können. Mit einer derartigen Ausgestaltung kann den unterschiedlichen Polymerisationseigenschaften der zu verwendenden Materialien Rechnung getragen werden.

In dem dargestellten Ausführungsbeispiel ist der Aufnahmebereich 12 napfförmig ausgebildet. Seine Öffnung 14 ist aus Fig. 2 besser ersichtlich und erstreckt sich in der Darstellung gemäß Fig. 1 nach unten/hinten in der Zeichnungsebene. Der Aufnahmebereich 12 lässt sich mit einer licht- und/oder wärmeund/oder druckpolymerisierbaren Masse befüllen. Über eine strahlungsundurchlässige Folie 16 ist die Öffnung 14 abgedeckt. Die Folie 16 ist entlang einer ringförmigen Schweißnaht 18 mit dem Grundkörper 20 verbunden. Eine Greifhandhabe 23 erleichtert in an sich bekannter Weise das Abziehen der Folie 16.

Der Grundkörper 20 ist - abgesehen von dem Aufnahmebereich 12 - ebenfalls napfförmig ausgebildet. Seine Öffnung 24 ist jedoch der Öffnung 14 gegenüberliegend ausgebildet, so dass in der Darstellung gemäß Fig. 1 die Öffnung 24 nach oben/vorne offenliegt. Der Grundkörper 20 weist eine Grundplatte 26 auf, die sich kreisringförmig erstreckt und an ihrem Außenrand von einer Umfangswand 28 umgeben ist.

An der Innenseite der Umfangswand 28 ist ein Streifen 30 aus Papier aufgebracht. Der Streifen 30 trägt eine Vielzahl von Farb-Temperaturindikatoren, von denen zwei Farb-Temperaturindikatoren 32 und 34 beispielhaft herausgegriffen seien. Die beiden Farb-Temperaturindikatoren 32 und 34 sind aus einem Material ausgebildet, das seine Helligkeit und/oder Farbe beim Erreichen einer vorgegebenen Temperatur ändert, und zwar irreversibel. Der Farb-Temperaturindikator 32 ändert sich von weiß auf schwarz bei einer Temperatur von 102° C, und der Farb-Temperaturindikator 34 ändert seine Farbe von weiß auf schwarz beim Erreichen der Temperatur 106° C. In entsprechender Weise weisen auch die diesen benachbarten Farb-Temperaturindikatoren Auslösetemperaturen auf, die in bevorzugt gleichförmigen Schritten oder Stufen voneinander beabstandet sind. Der Streifen 30 mit den Temperaturindikatoren bildet demnach eine Art Skala. Zusätzlich kann im Bodenbereich, also auf der Grundplatte 26 dem jeweiligen Farb-Temperaturindikator benachbart die Auslösetemperatur aufgedruckt sein, dem Indikator 32 benachbart also 102° C und dem Temperaturindikator 34 benachbart 106° C.

In dem dargestellten Ausführungsbeispiel sind eine Vielzahl einander benachbarter Farb-Temperaturindikatoren vorgesehen. In der Praxis können durchaus 20 oder sogar noch mehrere der Farb-Temperaturindikatoren je nach der erwünschten Anwendung fein abgestuft oder grob abgestuft verwendet werden. Es versteht sich, dass anstelle dessen aus Kostengründen aber auch nur wenige oder im Einzelfall lediglich zwei Farb-Temperaturindikatoren eingesetzt werden können, beispielsweise wenn lediglich die Entscheidung ansteht, ob eine zu prüfende Energiequelle, in der Regel also Lampe, eines Polymerisationsgeräts den Anforderungen bei einer bestimmten eingestellten Solltemperatur noch genügt oder nicht.

Wenn der erfindungsgemäße Prüfkörper in der Position gemäß Fig. 1 oder 2 in einem Polymerisationsgerät eingesetzt würde, würden die Farb-Temperaturindikatoren von der strahlenden Energiequelle auch unmittelbar beaufschlagt. Die direkte Wärme- und Lichtstrahlung wurde das Messergebnis beeinflussen. Um dies zu verhindern, wird der Prüfkörper 10 für Messzwecke umgedreht, so dass seine Öffnung 24 nach unten zu liegen kommt. In diesem Fall liegt die Öffnung 14 gemäß Fig. 2 frei und die in dem Aufnahmebereich 12 eingebrachte Masse wird der Energiebeaufschlagung ausgesetzt.

Der Grundkörper 20 besteht aus einem beliebigen geeigneten Material. Eine gewisse Temperaturfestigkeit ist erwünscht, aber die Herstellkosten sollten im Rahmen gehalten werden. Daher kommt die Herstellung aus einem hellen Karton-Presskörper in Betracht, hell, um zu verhindern, dass zu viel Strahlung absorbiert wird. Es versteht sich, dass anstelle dessen aber auch eine beliebige andere Ausgestaltung, beispielsweise auch aus Metall oder einem temperaturfesten Kunststoff möglich ist.

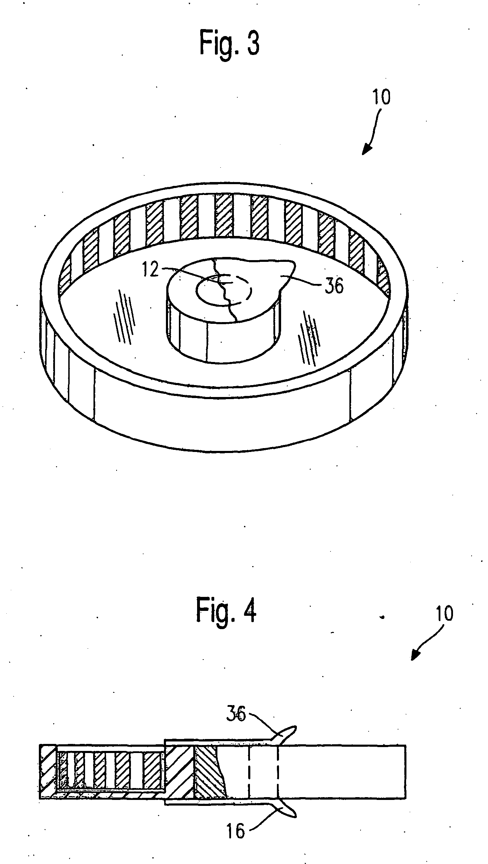

Fig. 3 zeigt eine weitere Ausführungsform eines erfindungsgemäßen Prüfkörpers 10. Hier wie auch in den weiteren Figuren weisen gleiche Bezugszeichen auf gleiche Teile hin. Der Prüfkörper 10 weist bei dieser Ausführungsform eine Durchgangsbohrung für die Bildung des Aufnahmebereichs 12 auf. Anstelle einer Folie 16 ist der Aufnahmebereich daher mit zwei Folien 16 und 36 abgedeckt.

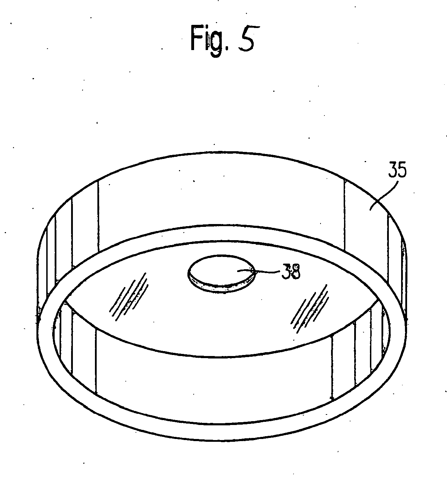

Fig. 5 zeigt demgegenüber die Ausgestaltung einer Art Deckel 35 für einen erfindungsgemäßen Prüfkörper 10, an dessen Außenumfang Farb-Temperaturindikatoren 32, 34 innenseitig ausgebildet sind. Bei dieser Ausführungsform ist der Aufnahmebereich unterhalb einer Durchtrittsöffnung 38 gebildet. Dort ist die zu polymerisierende Masse aufgebracht. Die Energiestrahlung kann durch die Öffnung 38 in den Innenraum des Prüfkörpers 10, nämlich in den Aufnahmebereich, eindringen. Durch Wärmeübertragung kann sie den Farbumschlag der Temperaturindikatoren bewirken.

## Patentansprüche

1. Prüfkörper für ein Polymerisationsgerät für den Dentalbereich, mit einer Energiequelle, wobei der Prüfkörper (10) einen Grundkörper (20) mit einem Aufnahmebereich (12) aufweist, der mit einer licht- und/oder wärme- und/oder druckhärtbaren Masse füllbar ist sowie von der Energiequelle des Polymerisationsgerätes beaufschlagbar ist, **dadurch gekennzeichnet, dass** der Prüfkörper (10) mindestens einen Farb-Temperaturindikator (32, 34) aufweist, der seine Farbe und/oder seinen Helligkeitswert beim Erreichen oder Überschreiten einer vorgegebenen Temperatur irreversibel ändert.

2. Prüfkörper nach Anspruch 1, **dadurch gekennzeichnet, dass** der mindestens eine Farb-Temperaturindikator (32, 34) seine Farbe und/oder seinen Helligkeitswert beim Erreichen oder Überschreiten einer vorgegebenen Temperatur irreversibel ändert.

3. Prüfkörper nach Anspruch 1 oder 2, **dadurch gekennzeichnet, dass** mehrere Farb-Temperaturindikatoren (32, 34) voneinander beabstandet oder aneinander grenzend auf einem streifenförmigen Trägerelement (30) angeordnet sind, welches mit dem Grundkörper (20) in Verbindung steht.

4. Prüfkörper nach Anspruch 3, **dadurch gekennzeichnet, dass** das streifenförmige Trägerelement (30) aus Papier besteht.

5. Prüfkörper nach einem der Ansprüche 3 oder 4,
**dadurch gekennzeichnet, dass** das streifenförmige Trägerelement (30) auf einer inneren Umfangsoberfläche und/oder an einer mindestens teilweise zur Auflagefläche hin gerichteten Oberfläche des Grundkörpers (20) angeordnet ist.

6. Prüfkörper nach einem der vorhergehenden Ansprüche,
**dadurch gekennzeichnet, dass** jeder Farb-Temperaturindikator (32, 34) beim Erreichen einer Auslösetemperatur von einer ersten Farbe oder einem Helligkeitswert auf eine zweite Farbe oder einem Dunkelheitswert wechselt.

7. Prüfkörper nach einem der vorhergehenden Ansprüche,
**dadurch gekennzeichnet, dass** jeder Farb-Temperaturindikator (32, 34) beim Erreichen einer Auslösetemperatur seine Farbe von weiß auf schwarz wechselt.

8. Prüfkörper nach einem der vorhergehenden Ansprüche,
**dadurch gekennzeichnet, dass** die Auslösetemperatur der Farb-Temperaturindikatoren (32, 34) im Bereich zwischen 90°C und 120°C, vorzugsweise im Bereich von 100°C bis 108°C, liegt.

9. Prüfkörper nach einem der vorhergehenden Ansprüche,
**dadurch gekennzeichnet, dass** die Abstufungen der Farb-Temperaturindikatoren (32, 34) zu 2°C oder 3°C bis 6°C gewählt sind.

10. Prüfkörper nach einem der vorhergehenden Ansprüche,
**dadurch gekennzeichnet, dass** die Auslösetemperatur der Farb-Temperaturindikatoren (32, 34) je auf 1% genau ist.

11. Prüfkörper nach einem der hervorgehenden Ansprüche,
**dadurch gekennzeichnet, dass** der Aufnahmebereich (12) zentral angeordnet ist und eine sich im Wesentlichen senkrecht zu einer Auflagefläche des Grundkörpers (20) erstreckende Tiefe aufweist, die größer als die größte Querschnittserstreckung des Aufnahmebereiches (12) ist.

12. Prüfkörper nach einem der vorhergehenden Ansprüche,
**dadurch gekennzeichnet, dass** die Tiefe des Aufnahmebereiches (12) 5 mm bis 20 mm und insbesondere 8 mm bis 10 mm beträgt.

13. Prüfkörper nach einem der vorhergehenden Ansprüche,
**dadurch gekennzeichnet, dass** der Aufnahmebereich (12) im Wesentlichen zylindrisch oder quaderförmig ausgebildet ist.

14. Prüfkörper nach einem der vorhergehenden Ansprüche,
**dadurch gekennzeichnet, dass** sich der Aufnahmebereich (12) durch den Grundkörper (20) erstreckt.

15. Prüfkörper nach einem der vorhergehenden Ansprüche,
**dadurch gekennzeichnet, dass** der Aufnahmebereich (12) eine sich über die gesamte Tiefe (T) des Aufnahmebereiches (12) erstreckende, größte lichte Weite von 2 mm bis 10 mm aufweist.

16. Prüfkörper nach einem der vorhergehenden Ansprüche,
**dadurch gekennzeichnet, dass** mindestens der Aufnahmebereich (12) des Grundkörpers (20) von wenigstens einer entfernbaren lichtundurchlässigen Folie (16) abgedeckt oder umhüllt ist.

17. Prüfkörper nach Anspruch 16, **dadurch gekennzeichnet, dass** der ganze Grundkörper (20) von der entfernbaren lichtundurchlässigen Folie (16) abgedeckt oder umhüllt ist.

18. Prüfkörper nach einem der vorhergehenden Ansprüche,
**dadurch gekennzeichnet, dass** ein Abdeckelement (35) vorgesehen ist, das Licht von den Farb-Temperaturindikatoren (32, 34) fernhält und eine Beaufschlagung der polymerisierbaren Masse mit Licht und/oder Wärme und/oder Druck zulässt.

19. Prüfkörper nach einem der vorhergehenden Ansprüche,
**dadurch gekennzeichnet, dass** der Grundkörper (20) mindestens teilweise aus einem strahlungsundurchlässigen Material besteht oder wenigstens teilweise mit einer lichtundurchlässigen Schicht beschichtet ist, und dass der lichtundurchlässige Teil des Grundkörpers (20) zwischen der Energiequelle des Polymerisationsgeräts und den Farb-Temperaturindikatoren (32, 34) vorgesehen ist.

20. Prüfkörper nach einem der vorhergehenden Ansprüche,
**dadurch gekennzeichnet, dass** der Aufnahmebereich (12) im Wesentlichen zentral an dem Grundkörper (20) angebracht ist.

21. Verwendung des Prüfkörpers gemäß einem der Ansprüche 1 bis 20 in einem Polymerisationsgerät, dessen Innenraum für die Polymerisation eines Dentalrestaurationselements bestimmt ist und das eine im Wesentlichen ebene Fläche aufweist, auf welcher der Prüfkörper (10) im Wesentlichen mittig auflegbar ist.

22. Polymerisationsgerät mit einer Energiequelle zur Abgabe einer Polymerisationsstrahlung, mit einer im Wesentlichen ebenen Fläche, auf welcher ein zu polymerisierender Gegenstand auflegbar ist, **dadurch gekennzeichnet, dass** das Polymerisationsgerät als Zubehör einen Prüfkörper (10) gemäß einem der Ansprüche 1 bis 20 aufweist, der auf der im Wesentlichen ebenen Fläche auflegbar ist.

## Claims

1. A test body for a polymerization device for the dental field comprising an energy source, the test body (10) including a base body (20) with a receipt region (12) which is fillable with a light curable and/or thermosetting and/or pressure curable mass and which can be irradiated by the energy source of the polymerization device **characterized in that** the test body (10) comprises at least one color-temperature indicator (32, 34) which changes its color and/or its brightness value irreversibly when reaching or exceeding a predetermined temperature.

2. The test body according to claim 1 **characterized in that** the at least one color-temperature indicator (32, 34) changes its color and/or its brightness value irreversibly when reaching or exceeding a predetermined temperature.

3. The test body according to claim 1 or 2 **characterized in that** several color-temperature indicators (32, 34) are arranged in a manner spaced apart from each other or adjacent to each other on a strip-shaped support element (30) which is connected to the base body (20).

4. The test body according to claim 3 **characterized in that** the strip-shaped support element (30) consists of paper.

5. The test body according to claim 3 or 4
**characterized in that** the strip-shaped support element (30) is arranged on an inner circumferential surface and/or on a surface of the base body (20) which is at least partially facing the contact surface.

6. The test body according to any of the foregoing claims
**characterized in that** each color-temperature indicator (32, 34) changes from a first color or a brightness value to a second color or a darkness value when reaching a release temperature.

7. The test body according to any of the foregoing claims
**characterized in that** each color-temperature indicator (32, 34) changes its color from white to black when reaching a release temperature.

8. The test body according to any of the foregoing claims
**characterized in that** the release temperature of the color-temperature indicators (32, 34) is in the range of between 90°C and 120°C, preferably in the range of 100°C to 108°C.

9. The test body according to any of the foregoing claims
**characterized in that** the gradations of the color-temperature indicators (32, 34) are selected as 2°C or 3°C to 6°C.

10. The test body according to any of the foregoing claims
**characterized in that** the release temperature of the color-temperature indicators (32, 34) is each accurate to 1%.

11. The test body according to any of the foregoing claims
**characterized in that** the receipt region (12) is disposed centrally and is provided with a depth which extends substantially perpendicularly to a contact surface of the base body (20) and which is greater than the largest transverse dimension of the receipt region (12).

12. The test body according to any of the foregoing claims
**characterized in that** the depth of the receipt region (12) is 5mm to 20mm and in particular 8mm to 10mm.

13. The test body according to any of the foregoing claims
**characterized in that** the receipt region (12) has a substantially cylindrical or rectangular shape.

14. The test body according to any of the foregoing claims
**characterized in that** the receipt region (12) extends through the base body (20).

15. The test body according to any of the foregoing claims
**characterized in that** the receipt region (12) is provided with a largest free space of 2mm to 10mm which extends through the total depth (T) of the receipt region (12).

16. The test body according to any of the foregoing claims
**characterized in that** at least the receipt region (12) of the base body (20) is covered with or wrapped in at least one removable light impermeable foil (16).

17. The test body according to claim 16 **characterized in that** the entire base body (20) is covered with or wrapped in the removable light impermeable foil (16).

18. The test body according to any of the foregoing claims
**characterized in that** a cover (35) is provided which shields the color-temperature indicators (32, 34) from being irradiated with light and permits the application of light and/or heat and/or pressure on the polymerizable mass.

19. The test body according to any of the foregoing claims
**characterized in that** the base body (20) consists at least partially of a radiation impermeable material or is at least partially coated with a light impermeable layer and that the light impermeable part of the base body (20) is provided between the energy source of the polymerization device and the color-temperature indicators (32, 34).

20. The test body according to any of the foregoing claims
**characterized in that** the receipt region (12) is disposed substantially centrally on the base body (20).

21. Use of the test body according to one of the claims 1 to 20 in a polymerization device whose interior is intended for the polymerization of a dental restauration part and which is provided with a substantially planar surface onto which the test body (10) can be disposed substantially centrally.

22. Polymerization device with an energy source for giving off a polymerization radiation with a substantially planar surface onto which an item which will be polymerized can be disposed **characterized in that** the polymerization device is provided with a test body (10) according to one of the claims 1 to 20 as an accessory which can be disposed on the substantially planar surface.

## Revendications

1. Spécimen pour un appareil de polymérisation pour une applications dentaire, avec une source d'énergie, où le spécimen (10) présente un corps principal (20) avec une zone de réception (12), qui est remplissable avec une masse qui durcit sous l'action de la lumière et / ou de la chaleur et / ou de la pression et actionné par l'énergie de la source d'énergie **caractérisé en ce que** le spécimen (10) présente au moins un indicateur de température par changement de couleur (32, 34) qui change de manière irréversible de couleur et / ou de valeur de luminosité quand elle atteint ou franchit une température seuil prédéterminée.

2. Spécimen selon la revendication 1, **caractérisé en ce qu'**au moins un indicateur de température par changement de couleur (32, 34) change de couleur et / ou de valeur de luminosité quand elle atteint ou franchit une température seuil prédéterminée.

3. Spécimen selon la revendication 1 ou 2, **caractérisé en ce qu'**une pluralité d'indicateurs de température par la couleur (32, 34) sont disposés espacées ou contigus sur un élément porteur en forme de bande (30), qui est en connexion avec le corps principal (20).

4. Spécimen selon la revendication 3, **caractérisé en ce que** l'élément porteur en forme de bande (30) est fait de papier.

5. Spécimen selon la revendication 3 ou 4, **caractérisé en ce que** l'élément porteur en forme de bande (30) est disposé sur une surface interne de la circonférence et / ou sur une surface du spécimen (20) au moins partiellement dirigée vers la surface d'appui.

6. Spécimen selon l'une des revendications précédentes, **caractérisé en ce que** lorsqu'une température de déclenchement est atteinte, chaque indicateur de température par changement de couleur (32, 34) change d'une première couleur ou valeur de luminosité vers une deuxième couleur ou valeur d'obscurité.

7. Spécimen selon l'une des revendications précédentes, **caractérisé en ce que** lorsque une température de déclenchement est atteinte, chaque indicateur de température par changement de couleur (32, 34) change de couleur de blanc au noir.

8. Spécimen selon l'une des revendications précédentes, **caractérisé en ce que** la température de déclenchement des indicateurs de température par changement de couleur (32, 34) est comprise dans une gamme entre 90 ° et 120 °C, de préférence dans la gamme entre 100 °C et 108 °C.

9. Spécimen selon l'une des revendications précédentes, **caractérisé en ce que** les graduations des indicateurs de température par changement de couleur (32, 34) sont choisies à 20 °C ou 30°C à 60°C.

10. Spécimen selon l'une des revendications précédentes, **caractérisé en ce que** la température de fonctionnement de chaque indicateur de température par changement de couleur (32, 34) est précise à 1 %.

11. Spécimen selon l'une des revendications précédentes, **caractérisé en ce que** la zone de réception (12) est disposée au centre et présente une profondeur s'étendant essentiellement perpendiculaire à une surface d'appui du corps de base (20) qui est supérieure à la plus grande dimension transversale de la zone de réception (12).

12. Spécimen selon l'une des revendications précédentes, **caractérisé en ce que** la profondeur de la zone de réception (12) mesure de 5 mm à 20 mm et de préférence de 8 mm à 10 mm.

13. Spécimen selon l'une des revendications précédentes, **caractérisé en ce que** la forme de la zone de réception (12) est essentiellement cylindrique ou rectangulaire.

14. Spécimen selon l'une des revendications précédentes, **caractérisé en ce que** la zone de réception (12) s'étend à travers le corps de base (20).

15. Spécimen selon l'une des revendications précédentes, **caractérisé en ce que** la zone de réception (12) présente une ouverture maximale de 2 mm à 10 mm s'étendant sur toute la profondeur (T) de la zone de réception (12).

16. Spécimen selon l'une des revendications précédentes, **caractérisé en ce qu'**au moins la zone de réception (12) du corps de base (20) est recouverte ou gainée d'au moins un film opaque amovible (16).

17. Spécimen selon la revendication 16, **caractérisé en ce que** l'ensemble du corps de base (20) est couvert ou gainé du film opaque amovible (16).

18. Spécimen selon l'une des revendications précédentes, **caractérisé en ce qu'**un élément de recouvrement (35) est fourni, qui forme une barrière entre les indicateurs de température par changement de couleur (32, 34) et la lumière et permet le chargement de la composition polymérisable avec la lumière et / ou de la chaleur et / ou de la pression.

19. Spécimen selon l'une des revendications précédentes, **caractérisé en ce que** le corps principal (20) est composé au moins en partie d'un matériau imperméable à l'irradiation ou tout au moins est partiellement recouverte d'une couche opaque, et que la partie opaque du corps (20) est fournie entre la source d'énergie de l'appareil de polymérisation et les indicateurs de la température par changement de couleur (32, 34).

20. Spécimen selon l'une des revendications précédentes, **caractérisé en ce que** la zone de réception (12) est située essentiellement centralement par rapport à la base (20).

21. Utilisation du spécimen selon l'une des revendications 1 à 20 dans un appareil de polymérisation, dont l'intérieur est conçu pour la polymérisation d'un élément de restauration dentaire et qui présente une surface essentiellement plane sur laquelle le spécimen (10) peut être placé essentiellement centralement.

22. Appareil de polymérisation avec une source d'énergie pour livrer un jet de polymérisation avec une surface essentiellement plane sur laquelle un objet de polymérisation peut être placé, **caractérisé en ce que** l'appareil de polymérisation présente comme accessoire un spécimen (10) selon l'une des revendications 1 à 20, qui peut être placé sur la surface essentiellement plane.
